# EUROPÄISCHE PATENTANMELDUNG

(11) **EP 4 019 594 A1**
(43) Veröffentlichungstag der Anmeldung: **29.06.2022**
(21) Anmeldenummer: 20216722.7
(22) Anmeldetag: 22.12.2020
(51) Int. Cl.: C09D 5/02, C09D 7/65, C09D 7/40

(54) **WANDFARBE MIT REDUZIERTEM GEWICHT**

(71) Anmelder: Dirks, Christoph, 55543 Bad Kreuznach (DE)
(72) Erfinder: Dirks, Christoph, 55543 Bad Kreuznach (DE)
(74) Vertreter: Michalski Hüttermann & Partner Patentanwälte mbB

(57) **Zusammenfassung**

Die Erfindung betrifft eine besonders leichte Wandfarbe enthaltend wenigstens 5 Vol.% expandierte polymere Leichtfüllstoffe, die Verwendung der Wandfarbe als Wandfarbe, ein Verfahren zur Beschichtung von Wänden sowie eine beschichtete Wand.

## Beschreibung

Die Erfindung betrifft eine besonders leichte Wandfarbe enthaltend wenigstens 5 Vol.% polymere Leichtfüllstoffe, die Verwendung der Wandfarbe als Wandfarbe, ein Verfahren zur Beschichtung von Wänden sowie eine beschichtete Wand.

Bisherige matte und offenporige Wandfarben sind sehr schwer. Sie enthalten üblicherweise einen hohen Prozentsatz an anorganischen Füllstoffen wie z.B. Carbonate oder Silikate. Die Dichte liegt üblicherweise bei wenigstens 1,4 kg/l.

CA 2242912 A1 beschreibt eine Zusammensetzung enthaltend unexpandierte Leichtfüllstoffe, die beispielsweise in Lackierkabinen der Autoserienlackierung vor Lackierung schützt, beziehungsweise ein Abblättern der Folgebeschichtungen bei thermischer Behandlung bei mehr als 85°C herbeiführt.

JP 2991316 B2 beschreibt eine wässrige Beschichtungszusammensetzung für Unterbodenschutz von Fahrzeugen enthaltend unexpandierte Polymerhohlkugeln.

JP 08225766 A beschreibt eine wasserfreie Beschichtungszusammensetzung.

JP 2017014342 A beschreibt eine wässrige Wandfarbe, die 1 bis 30 Gew.% und in der Regel mehr als 30 Vol.% Hohlkugeln als Füllstoff enthält, wobei auf 100 Teile Bindemittel etwa 50 bis 300 Teile Leichtfüllstoffe als Füllstoff kommen. So kann diese Wandfarbe keine ausreichende Deckfähigkeit erreichen.

US 6911484 B1 beschreibt eine wässrige Modelliermasse für Künstler die nach der Trocknung durch Erhitzen aufschäumt.

US 8287998 B2 beschreibt thermisch isolierende Beschichtungen.

WO 2014/003852 A2 beschreibt hydrophobe und gleichzeitig oleophobe Beschichtungen auf Lösemittelbasis.

Die Aufgabe der vorliegenden Erfindung ist die Bereitstellung einer Wandfarbe mit geringem Gewicht und dennoch ausreichender Deckfähigkeit, sowie guten Verarbeitungs- und Trocknungseigenschaften.

In einer ersten Ausführungsform wird die der Erfindung zu Grunde liegende Aufgabe durch eine Wandfarbe enthaltend 5 bis 30 Vol.% expandierte polymere Leichtfüllstoffe im Topfzustand gelöst.

Topfzustand im Sinne der Erfindung ist der Zustand der Wandfarbe im flüssigen Zustand vor dem Auftrag und vor der Trocknung.

Leichtfüllstoffe im Sinne der Erfindung sind alle Füllstoffe, die Hohlräume enthalten und insbesondere das Volumen der Hohlräume mehr als 50% des Volumens der Füllstoffpartikel ausmacht. Die Leichtfüllstoffe können beispielsweise Hohlkugeln sein. Das Material der Leichtfüllstoffe kann beispielsweise anorganisch oder Polymer sein. Das Polymer kann vorzugsweise ein Copolymer eines Methyl-Methacrylates sein. Zusätzlich zu polymeren Leichtfüllstoffen können auch anorganische Leichtfüllstoffe aus beispielsweise Glas enthalten sein. Die Leichtfüllstoffe sind vorzugsweise Polymerhohlkugeln. Die Leichtfüllstoffe können auch Hohlfüllstoffe sein.

Expandiert im Sinne der Erfindung bedeutet, dass die Leichtfüllstoffe zumindest teilweise expandiert sind. Es kann beispielsweise sein, dass sie durch ein Treibmittel später noch weiter expandiert werden. Die Leichtfüllstoffe können aber auch vollständig expandiert sein.

Vorzugsweise enthält die Wandfarbe bis zu 10 Vol.% weiterer Leichtfüllstoffe (beispielsweise aus Glas). Im Folgenden sind allerdings mit Leichtfüllstoffen immer die polymeren Leichtfüllstoffe gemeint, es sei denn, dass explizit die weiteren Leichtfüllstoffe erwähnt werden.

Die Dichte der Leichtfüllstoffe liegt vorzugsweise in einem Bereich von 10 bis 100 kg/m³, besonders bevorzugt 20 bis 80 kg/m³, ganz besonders bevorzugt in einem Bereich von 20 bis 50 kg/m³. Die Partikelgröße der Leichtfüllstoffe liegt im Median vorzugsweise in einem Bereich von 10 bis 80 µm. Die Dichte der weiteren Leichtfüllstoffe liegt vorzugsweise in einem Bereich von 100 bis 2000 kg/m³, besonders bevorzugt 150 bis 1600 kg/m³, ganz besonders bevorzugt 200 bis 1200 kg/m³. Die Partikelgröße der weiteren Leichtfüllstoffe liegt im Median vorzugsweise in einem Bereich von 15 bis 150 µm.

Die Wandfarbe enthält vorzugsweise 0,2 bis 1 Gew.%, ganz besonders bevorzugt 0,3 bis 0,9 Gew.% Leichtfüllstoffe im Topfzustand. Davon unabhängig enthält die Wandfarbe vorzugsweise 7 bis 25 Vol.%, ganz besonders bevorzugt 10 bis 20 Vol.% Leichtfüllstoffe im Topfzustand.

Der Feststoffgehalt im Rohstoff der Leichtfüllstoffe liegt vorzugsweise in einem Bereich von 5 bis 100 Gew.%. Rohstoff im Sinne der Erfindung ist das Material in seiner Lieferform, beispielsweise trocken, in einem Lösungsmittel oder Wasser. Die Lieferform der Leichtfüllstoffe ist beispielsweise (etwa 15%ig in Gew.%) mit Wasser angeteigt, wodurch die Handhabung erleichtert und die Staubneigung minimiert wird. Es sind jedoch auch trockene Pulver ohne Wasseranteil oder flüssige Suspensionen möglich. Die Einsatzmengen in Gewichtsprozent beziehen sich auf den Festkörper, also den reinen Leichtfüllstoff.

Die Wandfarbe ist vorzugsweise wässrig und enthält besonders bevorzugt 30 bis 80 Gew.%, ganz besonders bevorzugt 45 bis 75 Gew.% Wasser im Topfzustand. Die Wandfarbe hat vorzugsweise einen Festkörperanteil in einem Bereich von 20 bis 70 Gew.%, ganz besonders bevorzugt in einem Bereich von 25 bis 55 Gew.%.

Die Wandfarbe enthält vorzugsweise 2 bis 18 Gew.%, besonders bevorzugt 5 bis 15 Gew.% Bindemittel. Das Bindemittel ist vorzugsweise ein thermoplastisches Dispersionsbindemittel, wie beispielsweise ein Bindemittel auf Basis von Vinylacetat, Vinylacetat-Etylen, Styrolacrylat und/oder Reinacrylat. Durch den verhältnismäßig geringen Bindemittelanteil kann die Wandfarbe im getrockneten Zustand offenporig und atmungsaktiv sein. Die Lieferform des Bindemittels ist beispielsweise eine 20 bis 70 gew.%ige Dispersion in Wasser. Die Einsatzmengen in Gewichtsprozent beziehen sich auf den Festkörper, also auf die echt eingesetzte Polymermasse.

Die Glasübergangstemperatur (T_{g}) des Bindemittels liegt vorzugsweise in einem Bereich von -30 bis 30 °C. Die Mindestfilmbildetemperatur (MFT) liegt beispielsweise bei 0°C, kann aber bei VOC haltigen Produkten auch 20°C und mehr betragen.

Die Pigment-Volumen-Konzentration liegt vorzugsweise in einem Bereich von 65 bis 85%. Die Pigment-Volumen-Konzentration (PVK) gibt das Volumenverhältnis zwischen Pigmenten beziehungsweise Füllstoffen und dem Bindemittel im ausgehärteten Farbfilm wieder.

Die Wandfarbe enthält außer den Leichtfüllstoffen vorzugsweise 10 bis 40 Gew.%, besonders bevorzugt 15 bis 25 Gew.%, anorganische Füllstoffe. Dadurch ist ein ausreichendes Deckvermögen besonders leicht zu erzielen. Füllstoffe können über den "Dry-Hiding-Effekt" ein Deckvermögen erzeugen, wirken beispielsweise als "Spacer" für Pigmente und dienen beispielsweise zur Einstellung der Packungsdichte um die Rissneigung bei höheren Schichtdicken zu minimieren und um den Bindemittelbedarf zu optimieren.

Die anorganischen Füllstoffe weisen im Median vorzugsweise eine Korngrößen in einem Bereich von 0,05 µm bis 200 µm, besonders bevorzugt in einem Bereich von 0,4 µm bis 130 µm, auf.

Die Wandfarbe enthält vorzugsweise 1 bis 40 Gew.%, besonders bevorzugt 5 bis 30 Gew.%, Pigmente. Die Pigmente können vorzugsweise anorganisch sein. Alternativ können die Pigmente auch organisch sein.

Die Wandfarbe enthält vorzugsweise 0,1 bis 5 Gew.% weitere Additive wie beispielsweise Netzmittel, Dispergiermittel, Entschäumer beziehungsweise Entlüfter, Rheologieadditive, (Co-)Lösemittel, Hydrophobierungsmittel, Konservierungsmittel und/oder pH-Stabilisatoren und/oder pH-Einsteller (z.B. Alkali- oder Erdalkalihydroxide,Ammoniak, Amine, Silikonate oder Wassergläser).

Die Wandfarbe enthält vorzugsweise 0 bis 0,5 Gew.% Biozid.

Die Wandfarbe enthält vorzugsweise 0,05 bis 2 Gew.% Netzmittel und/oder Dispergiermittel (reine Substanz, nicht in Lieferform mit Lösungsmittel).

Die Wandfarbe enthält vorzugsweise 0,05 bis 2,0 Gew.% Entschäumer und/oder Entlüfter (reine Substanz, nicht in Lieferform mit Lösungsmittel).

Die Wandfarbe enthält vorzugsweise 0,1 bis 2 Gew.% Verdicker. Dadurch kann besonders gut Flotation beziehungsweise Sedimentation der Komponenten vermieden werden und eine Lagerstabilität erreicht werden. Der Verdicker kann beispielsweise ausgewählt sein aus der Gruppe Cellulose-, Stärke- und Guarderivate, Xanthan, Polyacrylat-Verdicker (beispielsweise ASE, HASE), Polyurethan-Verdicker, modifizierter Polyether, anorganische Verdicker auf Basis von Schichtsilikaten (beispielsweise Bentonite) oder Mischungen derselben. Besonders bevorzugt sind Cellulosederivate, Polyacrylat-Verdicker, Polyurethan-Verdicker oder Mischungen derselben.

Die Wandfarbe enthält vorzugsweise weniger als 3,5 Gew.%, weiter bevorzugt weniger als 2 Gew.%, ganz besonders bevorzugt weniger als 1,5 Gew.%, wasserlösliches Polymer. Dies hat den Vorteil, dass die Wandfarbe wasserbeständiger ist und mit geringen Bindemittelgehalten gute Nassabriebsklassen erreicht.

Die Wandfarbe enthält vorzugsweise weniger als 10 Vol.%, weiter bevorzugt weniger als 5 Vol.%, ganz besonders bevorzugt keine weiteren Leichtfüllstoffe.

Die Wandfarbe enthält vorzugsweise weniger als 2 Gew.%, ganz besonders bevorzugt weniger als 1 Gew.%, wasserlösliches, stickstoffhaltiges Polymer.

Die Wandfarbe enthält vorzugsweise weniger als 0,5 Gew.%, weiter bevorzugt weniger als 0,1 Gew.%, ganz besonders bevorzugt keinen, Weichmacher.

Vorzugsweise enthält die Wandfarbe im Topfzustand
a) 0,2 bis 1 Gew.% Leichtfüllstoffe,
b) 30 bis 80 Gew.% Wasser,
c) 2 bis 18 Gew.% Bindemittel,
d) 10 bis 40 Gew.% anorganische Füllstoffe, zusätzlich zu den Leichtfüllstoffen,
e) 1 bis 40 Gew.% Pigmente,
f) 0,1 bis 2 Gew.% Verdicker,
g) 0,05 bis 2% Netzmittel und/oder Dispergiermittel, und
h) 0,05 bis 2 Gew.% Entschäumer und/oder Entlüfter.

Die Wandfarbe ist vorzugsweise bei 23 °C flüssig und fließfähig, besonders bevorzugt bei struktuviskosem und thixotropem Fließverhalten. Die Viskosität der Wandfarbe liegt vorzugsweise in einem Bereich von 100 bis 20000 mPa·s, besonders bevorzugt in einem Bereich von 1000 bis 15000 mPa·s, ganz besonders bevorzugt in einem Bereich von 3000 bis 10000 mPa·s, gemessen bei 23 °C und 100 rpm nach DIN EN ISO 2555 (+23°C) mit einem Brookfield-Rotationsviskosimeter (DV RV; Spindel RV6).

Der pH-Wert der Wandfarbe liegt vorzugsweise in einem Bereich von pH 4 bis 12 , besonders bevorzugt in einem Bereich von pH 7 bis 9, insbesondere bei biozidhaltiger Wandfarbe. Bei biozidfreier Wandfarbe kann der pH-Wert auch in einem Bereich von pH 9 bis 11,49 liegen. Zur Einstellung des pH-Wertes sind vorzugsweise in der Wandfarbe Alkali-, Erdalkalihydroxide,Ammoniak, Amine, Silikonate und/oder Wassergläser enthalten, besonders bevorzugt in einer Menge in einem Bereich von 0,01 bis 1,5 Gew.%. Alternativ kann der pH-Wert der Wandfarbe aber auch im sauren Bereich liegen, beispielsweise wenn entsprechend geeignete Bindemittel, Netz-und Dispergiermittel, Verdicker und andere Additive eingesetzt werden.

Die Dichte der Wandfarbe liegt vorzugsweise in einem Bereich von 0,7 bis 1,25 kg/l, besonders bevorzugt 0,8 bis 1,2 kg/l.

Vorzugsweise ist die Wandfarbe eine Wandinnenfarbe.

### Weitere Ausführungsformen

In einer weiteren Ausführungsform wird die Aufgabe der Erfindung durch ein Verfahren zur Beschichtung von Wänden gelöst, das dadurch gekennzeichnet ist, dass die erfindungsgemäße Wandfarbe auf eine Wand aufgetragen wird.

Vorzugsweise wird die Wandfarbe anschließend an den Auftrag bei Raumtemperatur getrocknet.

Die Wandfarbe wird vorzugsweise mit Rolle, Pinsel oder Spritzgerät aufgetragen. Vorzugsweise wird die Wandfarbe mit 2,5 bis 20 m²/l aufgetragen.

In einer weiteren Ausführungsform wird die Aufgabe der Erfindung durch die Verwendung der erfindungsgemäßen Wandfarbe als Wandfarbe gelöst.

In einer weiteren Ausführungsform wird die Aufgabe der Erfindung durch eine Wand, beschichtet mit der erfindungsgemäßen Wandfarbe, gelöst.

Die Nassschichtdicke (beispielsweise bei einmaligem Auftrag) liegt dabei vorzugsweise in einem Bereich von 50 bis 400 µm.

### Ausführungsbeispiel

Zunächst wurden in einem Mischer bei Raumtemperatur 370 g Wasser vorgelegt. Anschließend werden nacheinander 3 g Lopon 890 (Firma BK Giulini, Dispergiermittel auf Acrylatbasis), 4 g Agitan 232 (Firma Münzing, Entschäumer), 180 g Tioxide R-TC90 (Firma Huntsman, Weißpigment), 90 g Socal P3 (Solvay, anorganischer Füllstoff), 70 g Saxolith extra 2 (Firma SH Minerals, anorganischer Füllstoff), 40 g Saxolith extra 15 (Firma SH Minerals, anorganischer Füllstoff), 30 g Expancel WE20d36 (Feststoffanteil 15 Gew.%, Firma Nouryon, Polymerhohlkugeln) und 4,5 g Bermocoll EHM 300 (Firma Nouryon, Verdicker auf Cellulosebasis) eingerührt. Nach Zugabe von 2,5 g 10%iger Natronlauge wurde die Mischung 15 Minuten dispergiert. Dabei wird die Drehzahl von beginnend 300rpm immer soweit erhöht, dass gerade noch keine Luft eingezogen wird aber sich ein Doughnut-Effekt ausbildet. Anschließend wurden nacheinander 2 g Acticide MBS (Firma Thor, Biozid), 180 g Acronal 6292 (Feststoffanteil ca. 50 Gew.% in Wasser, Firma BASF SE, Binder auf Styrol-Acrylat-Basis) und 1 g Thixol 53L (Firma Coatex, Verdicker) und 23 g Wasser eingerührt. Diese Mischung wurde dann weitere 10 Minuten so gerührt, dass eine gute Umwälzung und Durchmischung stattfindet, aber keine Luft eingezogen wird. Es entstand die erfindungsgemäße Wandfarbe.

Die Wandfarbe hatte eine Dichte von 1,15 kg/l, 20 Gew.% Anteil an anorganischen Füllstoffen, 51,1 Gew.% (59 Vol.%) Anteil an Wasser bei einem 48,9 Gew.%igen Festkörperanteil. Der Glanzgrad war matt.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

## Patentansprüche

1. Wandfarbe enthaltend 5 bis 30 Vol.% expandierte polymere Leichtfüllstoffe im Topfzustand.

2. Wandfarbe gemäß Anspruch 1, **dadurch gekennzeichnet, dass** die Dichte in einem Bereich von 0,7 bis 1,25 kg/l liegt.

3. Wandfarbe gemäß einem der vorhergehenden Ansprüche, **dadurch gekennzeichnet, dass** sie 2 bis 18 Gew.% Bindemittel enthält.

4. Wandfarbe gemäß einem der vorhergehenden Ansprüche, **dadurch gekennzeichnet, dass** sie 1 bis 40 Gew.% Pigmente enthält.

5. Wandfarbe gemäß einem der vorhergehenden Ansprüche, **dadurch gekennzeichnet, dass** sie 10 bis 40 Gew.% anorganische Füllstoffe enthält.

6. Wandfarbe gemäß einem der vorhergehenden Ansprüche, **dadurch gekennzeichnet, dass** sie folgende Bestandteile enthält:
a. 0,2 bis 1 Gew.% expandierte polymere Leichtfüllstoffe,
b. 30 bis 80 Gew.% Wasser,
c. 2 bis 18 Gew.% Bindemittel,
d. 10 bis 40 Gew.% anorganische Füllstoffe, zusätzlich zu den Leichtfüllstoffen,
e. 1 bis 40 Gew.% Pigmente,
f. 0,1 bis 2 Gew.% Verdicker,
g. 0,05 bis 2% Netzmittel und/oder Dispergiermittel, und
h. 0,05 bis 2 Gew.% Entschäumer und/oder Entlüfter.

7. Wandfarbe gemäß einem der vorhergehenden Ansprüche, **dadurch gekennzeichnet, dass** die Pigment-Volumen-Konzentration in einem Bereich von 65 bis 85% liegt.

8. Wandfarbe gemäß einem der vorhergehenden Ansprüche, **dadurch gekennzeichnet, dass** die Leichtfüllstoffe Polymerhohlkugeln sind.

9. Verfahren zur Beschichtung von Wänden, **dadurch gekennzeichnet, dass** die Wandfarbe gemäß einem der Ansprüche 1 bis 7 auf eine Wand aufgetragen wird.

10. Verwendung der Wandfarbe gemäß einem der Ansprüche 1 bis 7 als Wandfarbe.

11. Wand, beschichtet mit einer Wandfarbe gemäß einem der Ansprüche 1 bis 7.
